# EUROPÄISCHE PATENTSCHRIFT

(11) **EP 0 798 074 B1**
(45) Veröffentlichungstag und Bekanntmachung des Hinweises auf die Patenterteilung: **25.10.2000**
(21) Anmeldenummer: 97104149.6
(22) Anmeldetag: 12.03.1997
(51) Int. Cl.: B23Q 39/00, B27B 5/24, B23D 45/10, B27C 9/04

(54) **Sägevorrichtung zum stirnseitigen Zurichten von Profilstäben**
Sawing device for machining the front end of profiled rods
Dispositif de sciage pour le travail des parties terminales des barres profilées

(30) Priorität: 25.03.1996 DE 19611743
(43) Veröffentlichungstag der Anmeldung: 01.10.1997
(73) Patentinhaber: Gevo GmbH Geräte- und Vorrichtungsbau, 02894 Reichenbach (DE)
(72) Erfinder: Raabe, Erhard, 02894 Reichenbach (DE); Seifert, Horst, 02827 Görlitz (DE)
(74) Vertreter: Ilberg, Roland W., Dipl.-Ing.

(56) Entgegenhaltungen:
- WO-A-95/05274
- CH-A- 211 344
- DE-U- 29 508 986

## Beschreibung

Die Erfindung bezieht sich auf eine Sägevorrichtung zum stirnseitigen Zurichten von Profilstäben, insbesondere von Aufsetzsprossen im Fenster-, Türen- und Fassadenbau, entsprechend dem jeweiligen Paarungsfall Sprosse zu Flügelprofil, Sprosse zu Glasleistenprofil, Sprosse zu Sprossenprofil oder Sprosse zu Rahmenprofil, mit mindestens zwei in Schnittrichtung hintereinander angeordneten, einstellbaren Bearbeitungseinheiten, deren Antriebe im wesentlichen unterhalb der Bearbeitungsebene liegen, sowie einer Werkstückauflage mit einer Spanneinrichtung.

Glasscheiben von Fenstern oder Türen werden aus ästhetischen Gründen gern mittels Sprossen unterteilt. Diese werden zunehmend auf die Außenseiten von Doppelglasscheiben geklebt, wobei in die Sprossen eingezogene Dichtlippen den Abschluß zur Scheibe bilden oder sie werden zwischen die Doppelglasscheiben plaziert, um gleichfalls den Eindruck von Einzelscheiben hervorzurufen.

Immer aber sind Sprossen stirnseitig an die verschiedensten Formen, Größen und Neigungswinkel der Fenster- oder Türrahmen, Fenster- oder Türflügel und im Fassadenbau anzupassen, um einen einwandfreien Übergang zu erzielen. Dies geschieht durch Ablängen der Stäbe bzw. Auf-Gehrung-Sägen. Zusätzlich sind oftmals Sprossen auf der der Scheibe zugewandten Seite anzufasen, um Raum zu umlaufenden Scheibendichtungen bzw Dichtlippen der Sprossen selbst zu schaffen. Auch machen sich weitere Anpassungsarbeiten beim Verarbeiten rustikaler Elemente erforderlich. Anfas- und Ausformarbeiten werden üblicherweise in Handarbeit vorgenommen.

Es ist seit langem bekannt, sogenannte Doppelgehrungssägen einzusetzen, um einen Stab gleichzeitig an beiden Enden abzulängen. Zur näheren Beschreibung kann z.B. auf die DE 41 16 769 A1 verwiesen werden. Hierbei werden zwei im Winkel und Abstand zueinander einstellbare und auf Schlitten montierte Kreissägen an einem feststehenden Werkstück parallel vorbeigefahren. Jedes Ende besitzt im Anschluß eine durchgehende Schnittebene. Sofern zwei oder mehrere unterschiedlich große Sägeblätter zu einem Sägeblattpaket verspannt werden, lassen sich auch mit einer einzigen Vorschubbewegung Schnittstufen herstellen, wobei deren Winkel zueinander natürlich parallel verlaufen.

Weiterhin ist eine Glasleistensäge mit einem feststehenden Auflagetisch und einem vor- und zurückverschiebbaren Sägeaggregat bekannt, welches zwei in Verschieberichtung hintereinander angeordnete Kreissägeblätter aufweist, die in zwei sich in Höhe des festen Auflagetisches schneidenden, entsprechend dem Gehrungswinkel zueinander geneigten Ebenen angeordnet sind (DE 41 43 052 A1). Mit dieser Gärungssäge lassen sich mit einer Vorschubbewegung des Sägeaggregates sowohl das Ende einer Glasleiste als auch der neue Anfang der nächsten Glasleiste aus einem Werkstück schneiden. Werden mehrere Werkstücke parallel hintereinander verspannt, so lassen sich entsprechend viele Werkstükke gleichzeitig bearbeiten. Zusätzliche Bearbeitungsschritte, wie Anfasen oder Formfräsen, sind nicht vorgesehen.

Aus den deutschen Offenlegungsschriften DE 32 03 447 A1 und DE 35 44 058 A1 sind Keilschnittsägen mit zwei unter einem Winkel verstellbaren, gemeinsam gegen ein feststehendes Werkstück verfahrbaren Kreissägeblättern bekannt, wobei ein Sägeblatt von oben und das andere von unten auf das Werkstück einwirkt. Mit derartigen Sägen lassen sich Profile mit rechtwinkeligen Einschnitten versehen, z.B. für den Bilderrahmenbau, wobei Längenzuschnitte nicht realisierbar sind, oder es können nach Art der zuvor beschriebenen Gärungssäge zwei Prolilleistenenden zugleich auf Gehrung geschnitten werden.

Letztlich ist aus der DE 44 09 813 A1 eine Vorrichtung zum Zuschneiden von stabförmigen Werkstücken, insbesondere von Glassprossen für Fenster oder Türen bekannt, mit der sowohl die Abschrägungen mit unterschiedlichen Neigungswinkeln an den Stirnseiten von Glasleisten vorgenommen werden können als auch die an die Abschrägungen sich anschließenden Ausnehmungen für den Dichtungsbereich. Die Vorrichtung besitzt eine feststehende Aufnahme für die Sprosse, die mit ihrem Sprossenfuß nach oben in der Aufnahme liegt und einen verfahrbaren, sowie gegenüber der Vertikalen neigbaren Bearbeitungseinheit mit einem Kreissägeblatt von oben, zu dem axial zusätzlich ein Fräserkranz mit kleinerem Durchmesser aufgespannt werden kann. Beim Verschieben der Bearbeitungseinheit gegen die Sprosse wird in einem Arbeitsgang die Sprosse auf Gehrung gesägt und gleichzeitig eine Fase mit der Stirnseite des Fräsers angefräst.

Werden zwei Bearbeitungseinheiten hintereinander auf einem Schlitten angeordnet, lassen sich mit einem Vorschub das Ende einer Leiste und der Anfang einer weiteren Leiste sägen.

Unterschiedliche Winkel zwischen Gehrungsschnitt und Fase lassen sich nicht einstellen, es sei denn, man wechselt stets umständlich den auf die Antriebswelle gespannten Fräser gegen einen mit anderem Fräswinkel. Nachteilig an dieser Vorrichtung ist ferner, daß der Fräser sehr viel Material abtragen muß, was insbesondere bei Metallstäben ins Gewicht fällt. Außerdem muß die Schnittgeschwindigkeit der Säge auf den wesentlich langsameren Fräsvortrieb abgestimmt werden. Indem weiterhin die Sprosse mit dem Sprossenfuß nach oben in der Aufnahme liegt, ist es nur unter aufwendiger Höhenverstellung des Aufnahmetisches möglich, maßhaltige Sprossen unter Berücksichtigung der in der Praxis stark tolerierenden Fußhöhen zu schneiden. Insbesondere bei rustikalen und anderen Holzsprossen sind ganz erhebliche Maßabweichungen festzustellen.

Der Erfindung liegt die Aufgabe zugrunde, eine Vorrichtung zu schaffen, die einfach und handlich aufgebaut ist, eine rationelle Bearbeitung der Stirnseiten von Sprossen und dgl. bei hoher Standzeit der eingesetzten Werkzeuge, großer Arbeitsgeschwindigkeit und höchster Präzision ermöglicht. Insbesondere soll auch eine individuelle Veränderung der Einstellung der Schnitt-, Fasen- und Formfräswinkel insgesamt und zueinander erleichtert bzw. überhaupt ermöglicht werden.

Die Aufgabe wird erfindungsgemäß durch die im kennzeichnenden Teil des Anspruchs 1 angegebenen Merkmale gelöst. Weitere vorteilhafte Ausgestaltungen der Erfindung geben die Ansprüche 2 bis 10 an.

Indem die Antriebe der Bearbeitungseinheiten im wesentlichen unterhalb der Bearbeitungsebene liegen und die Schnittwinkeleinstellung für die Bearbeitungseinheiten über Kurvengetriebe derart erfolgt, daß die Schwenkpunkte sich stets in der Bearbeitungsebene befinden, also der Auflageebene für das Werkstück, welches mit dem Sprossenfuß nach unten auf die Werkstückauflage aufzulegen ist, wird erreicht, daß die voreingestellten Maßbeziehungen zwischen Trenn- bzw. Gehrungsschnitt einerseits und Fasenschnitt andererseits beim Verschwenken der Bearbeitungseinheiten sich nicht verändern und daß sich unterschiedliche Werkstückhöhen nicht auf die eingestellte Werkstücklänge auswirken.

Die Bearbeitungseinheiten sind feststehend, aber einstellbar, zum Gestell angeordnet, was die Konstruktion und Handhabung der Vorrichtung erleichtert. Entsprechend wird die Werkstückauflage von einem in Schnittrichtung verfahrbaren Schlitten gebildet, auf welchen die Werkstücke z.B. pneumatisch oder hydraulisch gespannt werden. Dadurch kann der beim Bearbeiten zu verfahrende Schlitten sehr leicht gebaut werden und entsprechend der leichten Last auch leicht verschoben werden.

Die in Vorschubrichtung erste Bearbeitungseinheit realisiert einen Trenn- bzw. Gehrungsschnitt an einem Werkstückende des Werkstücks, die in Vorschubrichtung zweite Bearbeitungseinheit realisiert einen Fasenschnitt an diesem Werkstückende, der also am Trenn- bzw. Gehrungsschnitt ansetzt und demzzufolge recht kurz ist. Weitere Bearbeitungseinheiten nehmen ggf. sonstige Konturenformungen an diesem Werkstückende vor, wobei in vorteilhafter Weise aufgrund der vorangegangenen Bearbeitungsstufen nur noch wenig Material abzutragen ist.

Alle an einem Werkstückende notwendigen Zurichtarbeiten werden während eines einzigen Werkstückvorschubs ausgeführt, was sicherstellt, daß die gewünschten Maße als Festmaße während der Bearbeitung an einem Werkstückende eingehen. Toleranzen treten somit nicht auf. Ein Nacharbeiten von Hand entfällt. Damit arbeitet die erfindungsgemäße Vorrichtung nicht nur sehr effektiv, sondern auch höchst genau.

In vorteilhafter Ausgestaltung der Erfindung werden Kreissägeaggregate und ggf. Formfräsaggregate als Bearbeitungseinheiten verwendet. Mit Kreissägen sind bekanntlich sehr saubere Schnitte bei hohem Vorschub möglich. Formfräser werden dort zur Konturennachbearbeitung eingesetzt, wo insbesondere rustikale Leisten abzulängen und einzupassen sind.

In weiterer Durchbildung der Erfindung sind die Bearbeitungseinheiten winkelmäßig sowohl zur Bearbeitungsebene als auch gegeneinander einstellbar gehalten, womit sich alle nur erdenklichen Gehrungs-, Fasen- und Ausformwinkel einstellen lassen.

Zusätzlich sind die Bearbeitungseinheiten auch quer zur Schnittrichtung zumindest gegeneinander einstellbar. Dabei wird es ausreichend sein, wenn nur die Fasensäge verschieblich gelagert wird, da das Ablängmaß bereits mittels verstellbarer, umklappbarer Anschläge, Skalen, oder auch nach Anriß am Werkstückschlitten eingestellt werden kann.

Die Fasenbearbeitungseinheit läßt sich nach einer Ausführung der Erfindung nach dem Lösen einer Klemmverbindung mittels eines Hebelgetriebes auf einem säulengeführten Schlitten feinfühlig gegen wechselbare Anschläge, insbesondere Revolveranschläge, verschieben.

Neben der Werkstücklängeneinstellung erfolgt in Weiterbildung der Erfindung auch die Winkeleinstellung des Werkstücks zum Zwecke von Schrägschnitten auf dem Werkstückschlitten mit Hilfe von Skalen.

Für anspruchsvolle Vorrichtungen bietet es sich an, alle Einstellungen automatisiert vorzunehmen.

Die Abführung des Abfalls des ersten Sägeschnittes erfolgt erfindungsgemäß durch eine mittels einer Luftdüse und Abweisnase erzeugten Turbulenz hinter dem ersten Sägeblatt. Damit wird der Gefahr von Verletzungen bei der Bedienung durch verklemmte und fortgeschleuderte Abfallstücke oder Schäden am Zahnkranz, Rissen im Blatt usw. sicher entgegengewirkt.

Ein Formfräsaggregat als Zusatzaggregat zur Bearbeitung rustikaler Sprossen kann in Vorschubrichtung zwischen zwei Sägeaggregate von oben angebaut werden, oder ist hinter das hintere Sägeaggregat von unten ansetzbar.

Ein Problem ist bei vielen bekannten Vorrichtungen das Sägen der in die Werkstücke eingezogenen Dichtlippen. Diese stehen normalerweise in einem sehr ungünstigen Schnittwinkel zum Sägeblatt, was Ausfransungen, Ausrisse und jedenfalls immer schlechte Schnittkanten mit sich bringt. In Ausgestaltung der Erfindung werden diese Gummilippen in sogenannten "Schleusen" geführt und während des Ablängens gestützt.

Zur Erhöhung der Produktivität lassen sich selbstverständlich auch bei vielen Zuschnitten mehrere parallel in Schnittrichtung liegende Werkstücke bearbeiten.

Anhand eines Ausführungsbeispiels soll die Erfindung näher erläutert werden.

In der zugehörigen Zeichnung zeigt
**Fig. 1** den prinzipiellen Aufbau einer erfindungsgemäßen Vorrichtung in der Seitenansicht,
**Fig. 2** eine Vorrichtung nach **Fig. 1** in der Draufsicht mit einer zusätzlich angebauten Bearbeitungseinheit zum Formfräsen.

Eine erste Bearbeitungseinheit 1 dient als Längen- bzw. Gehrungssäge. Sie besitzt ein Kreissägeblatt 1a, welches in bekannter Weise über eine Aufnahme mit der Welle eines Motors 1b verbunden ist. Der Motor 1b hängt in einer nicht näher dargestellten und an sich bekannten Aufnahme, die die Kurvenelemente für die Schwenkbewegung beinhaltet. Diese Aufnahme für den Motor 1b ist in Längsrichtung justierbar. Die Schwenkung des Motors 1b erfolgt um einen fest definierten Drehpunkt, der sich in der Ebene einer Werkstückauflage 2 und definiert zu einer Längenskala 3 für das Werkstück befindet. Zum Schwenken dient ein nicht näher dargestellter Hebelarm, der an jeder Stelle des Einstellbereichs geklemmt werden kann. Die Maßbeziehung für die Einstellung des Winkels a des Kreissägeblatts 1a zur Ebene der Werkstückauflage 2 wird über eine nicht näher dargestellte Skala, über Anschläge oder über eine Digitalanzeige fachgemäß erreicht.

Eine zweite Bearbeitungseinheit 4 mit einem zweiten Kreissägeblatt 4a dient als Fasensäge. Sie ist in Vorschubrichtung hinter der ersten Bearbeitungseinheit 1 angeordnet. Ihr prinzipieller Aufbau entspricht dem der ersten Bearbeitungseinheit 1, jedoch ist eine zusätzliche Längenverschiebemöglichkeit der Aufnahme für den Motor 4b in Achsrichtung über eine nicht näher dargestellte Linearführung gegen einen einstellbaren Mehrfachanschlag 5 für verschiedene Schnittbilder vorgesehen. Zum Bewegen der zweiten Bearbeitungseinheit 4 in Achsrichtung bzw. relativ zur Sägerichtung dient ein nicht näher dargestellten Werkzeugschlitten mit Linearantrieb nach Art eines vorschubexzenters, kombiniert mit einer an sich bekannten Klemmeinrichtung zur Feststellung.

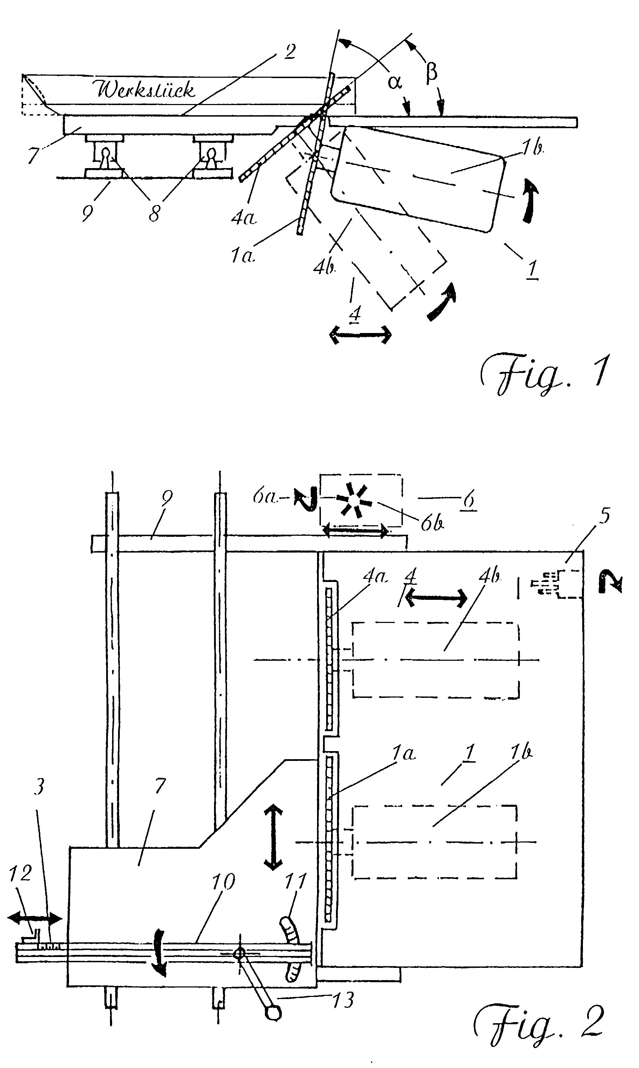

Wahlweise kann eine dritte Bearbeitungseinheit 6 als Zusatzaggregat angebaut werden, die einen Formfräser 6a oder dergleichen trägt, mit dessen Hilfe zusätzlich Konturen am Werkstückende geformt werden können. Der Motor 6b der dritten Bearbeitungseinheit 6 sitzt im Beispiel nach **Fig. 2** unterhalb der Bearbeitungsebene, ebenfalls in einer sowohl schwenkbaren als auch querverschieblichen, nicht näher dargestellten Aufnahme. Die dritte Bearbeitungseinheit 6 ist in **Fig. 1** der besseren Übersichtlichkeit wegen nicht eingezeichnet.

Die erfindungsgemäßen Sägevorrichtung besitzt ferner einen Werkstückschlitten 7, der von zwei Kugel-Linearführungen 8 auf dem Gestell 9 getragen und geführt wird. Ein Anlagebalken 10 ist für Gehrungsschnitte in zwei Richtungen schwenkbar und trägt alle an sich bekannten Meßskalen 3, 11, Anschlagelemente 12 und Feststellelemente 13.

Bei der erfindungsgemäßen Sägevorrichtung handelt es sich um eine kompakte, stabile und geschlossene Bauweise, bestehend aus dem Gestell 9, gegebenenfalls mit einem Spänekasten, und einem Oberbau, der die Bearbeitungseinheiten 1, 4, 6, den Werkstückschlitten 7 und alle Verschieb-, Schwenk-, Meß- und Justiereinheiten aufnimmt. Die Kreissägeblätter 1a, 4a und ein ggf. angebauter Formfräser 6a sind durch übliche Abdeckungen und Abweiseinrichtungen gegen unbeabsichtigtes Hineinfassen geschützt.

Ein auf den Werkstückschlitten 7 nach Maß aufgespanntes Werkstück wird bearbeitet, indem zunächst das eine Ende an den Bearbeitungseinheiten 1, 4 und ggf. 6 in einem Zuge vorbeigeführt wird, womit dieses Werkstückende hochgenau fertiggestellt ist. Danach wird das Werkstück gedreht und mit seinem anderen Ende auf ebendiese Weise mit gleicher Präzision und ggf. veränderten Einstellparametern fertiggestellt. Die Genauigkeit wird erreicht, indem das Zurichten eines Werkstückendes in einem Arbeitsgang, nämlich während einer einzigen Vorschubbewegung des festgespannten Werkstücks gegen die Bearbeitungseinheiten erfolgt, welche sowohl zum Werkstück als auch gegeneinander ausgerichtet und arretiert sind. Die Werkzeuge greifen dadurch genau in der vorbestimmten Weise an der Stirnseite des Werkstücks an. Ein Versatz, der bei einem Bearbeiten eines Werkstückendes in mehreren Arbeitsgängen immer droht, ist ausgeschlossen. Weiterhin wird die Längenpräzision dadurch erhöht, daß die Werkstückauflage 2 als Bezugsebene für die Bearbeitung des mit dem Fuß nach unten liegenden Werkstücks zugleich die Bearbeitungsebene ist und auch dann bleibt, sofern die Werkstückhöhe toleranzbedingt abweicht oder wenn andere Schneidwinkel α, β eingestellt werden, da bei jeder Winkeleinstellung dank der verwendeten Kurvengetriebe der Drehpunkt immer in der Ebene der Werkstückauflage 2 liegt.

## Patentansprüche

1. Sägevorrichtung zum stirnseitigen Zurichten von Profilstäben, insbesondere von Aufsetzsprossen im Fenster-, Türen- und Fassadenbau, entsprechend dem jeweiligen Paarungsfall Sprosse zu Flügelprofil, Sprosse zu Glasleistenprofil, Sprosse zu Sprossenprofil oder Sprosse zu Rahmenprofil, mit mindestens zwei in Schnittrichtung hintereinander angeordneten, einstellbaren Bearbeitungseinheiten, deren Antriebe im wesentlichen unterhalb der Bearbeitungsebene liegen, sowie einer Werkstückauflage mit einer Spanneinrichtung, mit folgenden Merkmalen:
a) die Schnittwinkeleinstellung für die Bearbeitungseinheiten (1, 4, 6) erfolgt über Kurvengetriebe derart, daß die Schwenkpunkte sich stets in der Ebene der Werkstückauflage (2) befinden,
b) die Bearbeitungseinheiten (1, 4, 6) sind entsprechend dem jeweiligen Paarungsfall winkelmäßig (α, β) sowohl zur Bearbeitungsebene als auch gegeneinander einstellbar und quer zur Schnittrichtung zumindest gegeneinander einstellbar,
c) die Bearbeitungseinheiten (1, 4, 6) sind während der Bearbeitung des Werkstücks feststehend zum Gestell (9) angeordnet und bearbeiten vollständig das Werkstückende im Mehrkonturenschnitt,
d) die in Vorschubrichtung erste Bearbeitungseinheit (1) realisiert einen Trenn- bzw. Gehrungsschnitt an einem Werkstückende, die in Vorschubrichtung zweite Bearbeitungseinheit (4) realisiert einen Fasenschnitt an diesem Werkstückende und in Vorschubrichtung nach der ersten und/oder nach der zweiten Bearbeitungseinheit (1, 4) optional angebaute Bearbeitungseinheiten (6) realisieren erforderlichenfalls Konturenfräsungen an diesem Werkstückende, wobei
e) die Werkstückauflage (2) von einem in Schnittrichtung verfahrbaren Schlitten (7) mit schwenkbarer Werkstückanlage (10) gebildet wird und
f) alle an einem Werkstückende vorzunehmenden Säge- und ggf. Fräsarbeiten während eines einzigen Werkstückvorschubs ermöglicht sind.

2. Sägevorrichtung nach Anspruch 1, **dadurch gekennzeichnet,** daß die Bearbeitungseinheiten (1, 4) aus Kreissägeaggregaten und ggf. weitere vorhandene Bearbeitungseinheiten (6) aus Formfräsaggregaten bestehen.

3. Sägevorrichtung nach Anspruch 1 oder 2, **dadurch gekennzeichnet,** daß die Bearbeitungseinheit (1) für den Trenn-bzw. Gehrungsschnitt auf einem Werkzeugschlitten mit Linearführung angeordnet ist und quer zur Schnittrichtung fest zum Gestell (9) einstellbar ist.

4. Sägevorrichtung nach Anspruch 1 oder 2, **dadurch gekennzeichnet,** daß die Bearbeitungseinheit (4) für den Fasenschnitt auf einem Werkzeugschlitten mit Linearführung angeordnet ist und nach dem Lösen einer Klemmung über ein Hebelgetriebe gegen einen Anschlag quer zur Schnittrichtung einstellbar ist.

5. Sägevorrichtung nach einem oder mehreren der vorhergehenden Ansprüche, **dadurch gekennzeichnet,** daß die Einstellungen über einstell- und wechselbare Anschläge (5) erfolgen.

6. Sägevorrichtung nach einem oder mehreren der vorhergehenden Ansprüche, **dadurch gekennzeichnet,** daß alle Einstellungen kraftgetrieben unter Verwendung einstellbarer Anschläge oder elektronischer Meß- und Stellmittel erfolgt.

7. Sägevorrichtung nach einem oder mehreren der vorhergehenden Ansprüche, **dadurch gekennzeichnet,** daß die Werkstücklängen- und Winkeleinstellung nach Skala (11), nach Anriß in Verbindung mit einer verschiebbaren Eichskala oder gegen verstellbare, klappbare Anschläge (12) erfolgt, die sich an einem in zwei Richtungen schwenkbaren Anlagebalken (10) auf dem verfahrbaren Werkstückschlitten (7) befinden, auf welchen das Werkstück mittels Pneumatikzylinder lagegerecht gespannt ist.

8. Sägevorrichtung nach einem oder mehreren der vorhergehenden Ansprüche, **dadurch gekennzeichnet,** daß die Abführung des Abfalls eines ersten Sägeschnittes durch eine mittels einer Luftdüse und Abweisnase erzeugten Turbulenz hinter dem ersten Kreissägeblatt (1a) erfolgt.

9. Sägevorrichtung nach einem oder mehreren der vorhergehenden Ansprüche, **dadurch gekennzeichnet,** daß ggf. in den Werkstücken eingezogene Dichtlippen mittels einer "Schleuse" während der Bearbeitung lageorientiert fixiert sind.

10. Sägevorrichtung nach einem oder mehreren der vorhergehenden Ansprüche, **dadurch gekennzeichnet,** daß gleichzeitig mehrere parallel eingespannte Werkstücke an einem Ende zugerichtet werden.

## Claims

1. Sawing apparatus for trimming the front ends of profiled rods, in particular superimposed glazing bars in window, door and facade construction, in accordance with the respective pairing of glazing bar to leaf profile, glazing bar to glazing-strip profile, glazing bar to glazing-bar profile, or glazing bar to frame profile, having at least two adjustable machining units, which are arranged one behind the other in the cutting direction and the drives of which lie essentially below the machining plane, and a work rest with a clamping device, having the following features:
a) the cutting angle for the machining units (1, 4, 6) is set via cam mechanisms in such a way that the pivoting points are always located in the plane of the work rest (2),
b) the machining units (1, 4, 6) can be set at an angle (α,β) in accordance with the respective pairing both relative to the machining plane and to one another and can be set transversely to the cutting direction at least relative to one another,
c) the machining units (1, 4, 6) are arranged so as to be fixed relative to the frame (9) during the machining of the workpiece and completely machine the workpiece end in a multiple-contour cut,
d) the first machining unit (1) in the feed direction effects a parting or mitre cut on one workpiece end, the second machining unit (4) in the feed direction effects a bevel cut on this workpiece end, and machining units (6) optionally attached in the feed direction downstream of the first and/or the second machining unit (1, 4) if need be effect contour milling cuts on this workpiece end, in which case
e) the work rest (2) is formed by a slide (7) traversable in the cutting direction and having a pivotable work-locating element (10), and
f) all sawing and if need be milling work to be carried out on a workpiece end is made possible during a single work feed.

2. Sawing apparatus according to Claim 1, characterized in that the machining units (1, 4) consist of circular-saw units and further machining units (6) possibly present consist of form-milling units.

3. Sawing apparatus according to Claim 1 or 2, characterized in that the machining unit (1) for the parting or mitre cut is arranged on a tool slide having a linear guide and can be set in a fixed position relative to the frame (9) transversely to the cutting direction.

4. Sawing apparatus according to Claim 1 or 2, characterized in that the machining unit (4) for the bevel cut is arranged on a tool slide having a linear guide and, after the release of a clamping mechanism, can be set via a lever mechanism against a stop transversely to the cutting direction.

5. Sawing apparatus according to one or more of the preceding claims, characterized in that the settings are effected via adjustable and interchangeable stops (5).

6. Sawing apparatus according to one or more of the preceding claims, characterized in that all the settings are effected in a power-driven manner with the use of adjustable stops or electronic measuring and adjusting means.

7. Sawing apparatus according to one or more of the preceding claims, characterized in that the length and angle setting of the workpiece is effected according to a scale (11), according to marking in combination with a displaceable calibration scale, or against adjustable, hinged stops (12), which are located on a locating beam (10), pivotable in two directions, on the traversable work slide (7), on which the workpiece is clamped in the correct position by means of pneumatic cylinders.

8. Sawing apparatus according to one or more of the preceding claims, characterized in that the waste from a first sawing cut is discharged by turbulence behind the first circular-saw blade (la), the turbulence being produced by means of an air nozzle and a deflecting nose.

9. Sawing apparatus according to one or more of the preceding claims, characterized in that sealing lips possibly recessed in the workpieces are fixed by means of a "sluice" so as to be orientated for position during the machining.

10. Sawing apparatus according to one or more of the preceding claims, characterized in that a plurality of workpieces clamped in parallel are simultaneously trimmed at one end.

## Revendications

1. Dispositif de sciage pour la préparation des extrémités frontales de profilés notamment de pièces rapportées telles que des petits bois de fenêtre ou de porte, ou pour la réalisation de façades, correspondant à une adaptation complémentaire des petits bois par rapport au profil du battant, par rapport au profil des baguettes de vitrage ou par rapport au profil d'un châssis, le dispositif comprenant au moins deux unités d'usinage réglables, installées l'une derrière l'autre dans la direction de coupe et dont les moteurs sont situés principalement en dessous du plan d'usinage, ainsi qu'un appui de pièce avec une installation de serrage,
dispositif caractérisé en ce que
a) le réglage de l'angle de coupe des unités d'usinage (1, 4, 6) est assuré par une transmission par courbes pour que les centres de rotation se trouvent toujours dans le plan de l'appui de pièce (2),
b) les unités d'usinage (1, 4, 6) sont réglables à la fois en fonction de l'appairement respectif, de manière angulaire (α, β), et par rapport au plan d'usinage, ainsi qu'un les unes par rapport aux autres et aussi transversalement à la direction de coupe, au moins de manière relative,
c) les unités d'usinage (1, 4, 6) sont prévues de manière fixe sur le bâti (9) pendant l'usinage de la pièce, et usinent complètement l'extrémité de pièce par une coupe à contours multiples,
d) la première unité d'usinage (1) dans le sens du mouvement réalise une coupe de séparation ou une coupe à l'onglet d'une extrémité de pièce, et la seconde unité d'usinage dans le sens du défilement (4), réalise une coupe de feuillure à cette extrémité de pièce, tandis que le dispositif d'avance, après la première et/ou la seconde unité d'usinage (1, 4) et l'unité d'usinage (6) en option, prévue en aval, réalise les fraisages de contour nécessaires sur cette extrémité de pièce,
e) l'appui de pièce (2) est formé par un chariot (7) mobile dans la direction de coupe et comporte un appui de pièce (10) pivotant,
f) tous les travaux de sciage ou de fraisage le cas échéant à effectuer sur l'extrémité de la pièce, se font au cours d'un passage unique de la pièce.

2. Dispositif de sciage selon la revendication 1,
caractérisé en ce que
les unités d'usinage (1, 4) comportant des disques de scie et le cas échéant d'autres unités d'usinage (6), sont équipées d'unités de fraisage pour la mise en forme.

3. Dispositif de sciage selon la revendication 1 ou 2,
caractérisé en ce que
l'unité d'usinage (1) est munie d'un guide linéaire sur un chariot porte-pièce, pour une coupe de séparation ou une coupe à l'onglet, et cette unité est réglable transversalement à la direction de coupe, de manière fixe par rapport au bâti (9).

4. Dispositif de sciage selon la revendication 1 ou 2,
caractérisé en ce que
l'unité d'usinage (4) est prévue, pour la coupe de feuillures sur un chariot de pièce avec guidage linéaire et, après desserrage d'une pince, cette unité peut se régler par serrage par l'intermédiaire d'une transmission à levier, contre une butée transversale à la direction de coupe.

5. Dispositif de sciage selon au moins l'une ou plusieurs des revendications précédentes,
caractérisé en ce que
les réglages se font par des butées réglables ou échangeables (5) .

6. Dispositif de sciage selon l'une ou plusieurs des revendications précédentes,
caractérisé en ce que
tous les réglages sont faits par des butées entraînées par la force et réglables, ou par des moyens de mesure et d'actionnement électroniques.

7. Dispositif de sciage selon l'une ou plusieurs des revendications précédentes,
caractérisé en ce que
les longueurs de pièce et les réglages angulaires se font suivant une échelle (11) selon le tracé, en liaison avec une échelle de tarage coulissante ou vis-à-vis de butées (12) basculantes réglables, les poutres d'appui (10) pivotantes dans deux directions, se trouvant sur le chariot porte-pièce (7) mobile sur lequel la pièce est bloquée dans la direction longitudinale par un vérin pneumatique.

8. Dispositif de sciage selon l'une ou plusieurs des revendications précédentes,
caractérisé en ce que
l'évacuation des déchets d'une première coupe se fait à l'aide d'une buse d'air et d'un bec d'évacuation créant une turbulence derrière la première lame de scie (1a).

9. Dispositif de sciage selon l'une ou plusieurs des revendications précédentes,
caractérisé en ce que
le cas échéant, des lèvres d'étanchéité insérées dans les pièces sont fixées à l'aide d'une « écluse » pendant l'usinage, de façon à être orientées en position.

10. Dispositif de sciage selon l'une ou plusieurs des revendications précédentes,
caractérisé en ce qu'
on aligne simultanément plusieurs pièces serrées parallèlement, à une extrémité.
